# EUROPÄISCHE PATENTSCHRIFT

(11) **EP 2 582 001 B1**
(45) Veröffentlichungstag und Bekanntmachung des Hinweises auf die Patenterteilung: **02.11.2016**
(21) Anmeldenummer: 12005573.6
(22) Anmeldetag: 31.07.2012
(51) Int. Cl.: H02H 1/06, H02H 3/20

(54) **Überspannungsschutzvorrichtung für elektronische Baugruppen**
Excess voltage protective device for electronic modules
Dispositif de protection contre les surtensions pour modules électroniques

(30) Priorität: 09.03.2012 DE 102012004577; 13.10.2011 DE 102011115852
(43) Veröffentlichungstag der Anmeldung: 17.04.2013
(73) Patentinhaber: Phoenix Contact GmbH & Co. KG, 32826 Blomberg (DE)
(72) Erfinder: Rohs, Markus, 32825 Blomberg (DE); Eilers, Markus, 31812 Bad Pyrmont (DE); Peter, Henry, 37574 Einbeck (DE)
(74) Vertreter: Bill, Burkart Hartmut

(56) Entgegenhaltungen:
- DE-A1- 3 923 710
- DE-A1-102008 051 514
- US-A1- 2004 184 208
- US-A1- 2008 123 236
- US-A1- 2010 284 114
- US-A1- 2011 299 205

## Beschreibung

Die vorliegende Erfindung betrifft eine Schaltungsvorrichtung für einen Überspannungsschutz elektronischer Baugruppen.

Für die Approbation von 24 VDC Baugruppen, die in der Automatisierungstechnik und insbesondere in der Sicherheitstechnik Verwendung finden, sind gemäß DIN EN 60950-1 Kapitel 2.2.2 zunehmend strengere Anforderungen an die Festigkeit gegen Überspannungen zu erfüllen.

Ein entsprechend geeigneter Schutz vor Überspannungen, die über die 24 VDC Versorgungsanschlüsse in eine elektronische Baugruppe einkoppeln können, kann zum Beispiel durch ein Relais im Versorgungsstrompfad bereitgestellt werden, mit dem eine nachgeschaltete, zu schützende elektronische Baugruppe von den Versorgungsanschlüssen getrennt werden kann, sobald an den Versorgungsanschlüssen eine Überspannung auftritt.

Innerhalb eines zulässigen Versorgungsspannungsbereichs zieht das Relais an, so dass eine nachfolgende Baugruppe mit Spannung versorgt wird. Der Ruhestrom zum Durchschalten des Relais wird über eine Schaltung aus dem Versorgungsstrompfad gewonnen.

Eine solche Schaltung kann z.B. eine selbstrückstellende Sicherung und eine Überspannungsschutzdiode umfassen, die im Zusammenwirken einen Überspannungsdetektor bilden. Die Überspannungsschutzdiode ist parallel zur Relaisspule angeordnet, wobei die Ansprechspannung dieser Diode auf die maximal zulässige Versorgungsspannung ausgelegt ist. Die Sicherung bildet zusammen mit der Diode und der Relaisspule eine Reihenschaltung. Im Falle einer Überspannung wird durch den hohen Strom, der durch die durchgeschaltete Überspannungsschutzdiode fließt, die selbstrückstellende Sicherung ausgelöst. Das Relais wird von der Versorgung getrennt und fällt dem Ruhestromprinzip zufolge in seine Ruhelage zurück und unterbricht den Stromfluss in Richtung der nachgeschalteten elektronischen Baugruppe.

Nachteilig am Stand der Technik ist, dass zum zuverlässigen Auslösen ein ausreichend hoher Strom durch die Sicherung fließen muss. Ein entsprechend hoher Stromfluss setzt einen niederohmigen Charakter der Überspannung voraus. Hochohmige Überspannungen können hingegen nicht zuverlässig erkannt werden, da ein Widerstand innerhalb des Versorgungskreises den Strom zum Auslösen der Sicherung derart begrenzen kann, dass die Auslöseschwelle der Sicherung nicht überschritten wird.

Die US 2004/0184208 A1 offenbart eine Schutzvorrichtung zur Überwachung einer elektrischen Wechselstromversorgung.

Die DE 10 2008 051 514 A1, die den Oberbegriff des Anspruchs 1 formt, offenbart eine Spannungsüberwachung zum sicheren Betrieb eines Sicherheitsmoduls mit der Möglichkeit zur Stromabschaltung durch ein Unterbrechungsmittel, welches durch eine weiteres Unterbrechungsmittel überprüfbar ist Die DE 39 23 710 A1 offenbart eine

Stromversorgungseinrichtung mit Überwachungsschaltung für mindestens zwei auf ein gemeinsames Bezugspotential bezogene Gleichspannungen unterschiedlicher Polarität mit einem Signalübertragungselement.
Die US 2008/0123236 A1 offenbart einen Computer mit einer Überspannungsschutzeinrichtung, welche zwischen einer CPU des Computers und der Stromversorgung geschaltet ist.

Die US 2010/0284114 A1 offenbart eine Schutzschaltung zur Unterdrückung von transienten Überspannungen.

Die gegenüber vorliegender Erfindung nachveröffentlichte US 2011/0299205 A1 offenbart eine Schutzschaltung für Schaltkreise gegenüber Über- und Unterspannungen.

Der Erfindung liegt die Aufgabe zugrunde, eine Vorrichtung für einen Überspannungsschutz bereitzustellen, mit der auch hochohmige Überspannungen zuverlässig ermittelt und abschaltet werden können.

Die Lösung der Aufgabe ist durch Gegenstände mit den Merkmalen gemäß den anhängenden unabhängigen Ansprüchen gegeben.

Zur Lösung dieser Aufgabe schlägt die vorliegende Erfindung eine Schaltungsvorrichtung für einen Überspannungsschutz elektronischer Baugruppen vor, die einen Spannungseingang und einen Spannungsausgang umfasst, die über wenigstens eine Schalteinrichtung schaltbar miteinander verbunden sind.

Die Schaltungsvorrichtung umfasst ferner eine Messschaltung zum Erfassen einer Spannung am Spannungseingang und eine Steuerungseinrichtung. Die Steuerungseinrichtung ist ausgebildet, die Schalteinrichtung in Abhängigkeit der mit der Messschaltung erfassten Spannung derart anzusteuern, dass bei einer Überspannung am Spannungseingang der Spannungsausgang mittels der Schalteinrichtung vom Spannungseingang getrennt ist.

Die Steuerungseinrichtung ist über einen Spannungswandler derart mit dem Spannungseingang verbunden, dass auch bei einer Überspannung eine Spannungsversorgung für die Steuerungseinrichtung gewährleistet ist.

Ein wesentlicher Vorteil einer Schaltungsvorrichtung gemäß vorliegender Erfindung ist, dass die Steuerungseinrichtung hinter einem Spannungswandler geschützt angeordnet ist, der einen weiten Eingangsspannungsbereich besitzt. Der maximal zulässige Eingangsspannungsbereich des Wandlers beträgt ein Mehrfaches einer maximal zulässigen Versorgungsspannung einer zu schützenden elektronischen Baugruppe.

Im Überspannungsfall, d.h. wenn der zulässige Bereich für die Versorgungsspannung überschritten ist, wird somit weiterhin eine Funktionsfähigkeit der Schaltungsvorrichtung für einen Überspannungsschutz elektronischer Baugruppen gewährleistet.

Die Spannungsfestigkeit der Schaltungsvorrichtung, d.h. der Spannungsbereich, indem ein Überspannungsschutz zuverlässig bereit steht, ist nur durch den Eingangsspannungsbereich des Spannungswandlers nach oben begrenzt.

Die Messschaltung einer erfindungsgemäßen Schaltvorrichtung kann einen Messstrompfad mit wenigstens einem Messkanal besitzen, wobei jedem Messkanal bevorzugt jeweils ein Pegelschalter zugeordnet sein kann.

Die Pegelschalter sind bevorzugt dazu ausgebildet, das Überschreiten eines vorbestimmten Spannungspegels zu erkennen und über eine zugeordnete Signalleitung an die Steuerungseinrichtung zu signalisieren.

Jedem Messkanal kann ein Schaltelement zugeordnet sein, das von der Steuerungseinrichtung ansteuerbar ist und das zum Testen der Messschaltung ausgebildet ist.

Der Pegelschalter kann beispielsweise einen Komparator umfassen, der mit einer Referenzspannungsquelle verbunden ist. Alternativ kann der Pegelschalter einen Transistor umfassen.

In einer besonders vorteilhaften Ausführung der Erfindung kann der Pegelschalter einen ersten Optokoppler und das Schaltelement einen zweiten Optokoppler umfassen.

Die Optokoppler ermöglichen eine galvanische Trennung zwischen der Messschaltung und der mit dieser in Verbindung stehenden Steuerungseinrichtung. Des Weitern wird der Pegelschalter im Wesentlichen durch eine Leuchtdiode des ersten Optokopplers gebildet, so dass ein zusätzlicher Komparator nicht erforderlich ist.

Der Messstrompfad kann einen Messkanal besitzen, der eine Reihenschaltung aus einer Z-Diode, einem ersten Widerstand und einem zweiten Widerstand umfasst. Der erste Optokoppler ist bevorzugt zum zweiten Widerstand parallel geschaltet.

Die Z-Diode ist im Messkanal vorzugsweise in Sperrrichtung geschaltet, so dass für einen Stromfluss durch den Messpfad ein vorbestimmter Spannungswert überschritten werden muss. Der erste und zweite Widerstand bilden einen Spannungsteiler, der derart dimensioniert ist, dass beim Erreichen einer Überspannung an der Leuchtdiode eine zum Durchschalten ausreichende Vorwärtsspannung anliegt.

Der zweite Optokoppler ist zur Z-Diode bevorzugt parallel geschaltet, so dass diese, durch die Steuerungsvorrichtung, z.B. mittels eines Testsignals angesteuert, zum Testen der Messschaltung überbrückbar ist.

Mit dem Überbrücken der Z-Diode wird die durch die Dimensionierung des Messkanals vorgegebene Schaltschwelle abgesenkt, so dass der Pegelschalter bzw. der erste Optokoppler auch bei einer zulässigen Versorgungsspannung an den Spannungseingängen auslösen kann. Im Falle einer funktionsfähigen Messschaltung empfängt die Steuerungseinrichtung auf das ausgesendete Testsignal ein resultierendes Feedback-Signal.

In einer alternativen Ausgestaltung kann der Messstrompfad eine Anzahl aus wenigstens zwei in Reihe geschalteter Messkanäle umfassen. Jeder Messkanal umfasst bevorzugt eine Reihenschaltung aus einer Z-Diode, einen ersten Widerstand und einen zweiten Widerstand. Der erste Optokoppler eines jeweiligen Messkanals ist jeweils bevorzugt zum zweiten Widerstand des Messkanals parallel geschaltet.

Der zweite Optokoppler kann zum zugeordneten Messkanal parallel geschaltet sein, so dass der jeweilige Messkanal zum Testen der Messschaltung überbrückbar ist.

Die Messschaltung kann in einer alternativen Ausführung der Erfindung einen Spannungsteiler und einen Digital/Analog-Wandler zum Messen und Digitalisieren einer Spannung am Spannungseingang umfassen. Die Steuerungseinrichtung kann eine Einrichtung zum Vergleichen des digitalisierten Spannungswerts mit einem zulässigen Grenzwert umfassen.

Die Erfindung umfasst auch ein Überspannungsschutzmodul, das eine der zuvor beschriebenen Schaltungsvorrichtungen umfasst, dass zum Anschließen einer nachgeschalteten elektronische Baugruppe geeignet ist. Ein solches Modul ist insbesondere zur Nachrüstung eines Überspannungsschutzes für bestehende Baugruppen geeignet. Der Spannungsausgang der Schaltungsvorrichtung ist bevorzugt mit einem Eingang einer zu schützenden elektronischen Baugruppe verbindbar. Der Spannungseingang ist an eine Versorgungsspannungsquelle anschließbar.

Die erfindungsgemäße Schaltungsvorrichtung kann auch als ein Bestandteil einer elektronischen Baugruppe verwendet werden, wobei diese bevorzugt unmittelbar am Eingang einer solchen Baugruppe anzuordnen ist.

Die Erfindung wird nachfolgend anhand beispielhafter Ausführungsformen unter Bezugnahme der beigefügten Zeichnungen detaillierter beschrieben. In den Zeichnungen zeigen:
- Fig. 1:: ein Bockschaltbild einer Schaltungsvorrichtung für einen Überspannungsschutz elektronischer Baugruppen;
- Fig. 2:: eine testbare Messschaltung zur Detektion von Überspannungen am Spannungseingang einer Schaltungsvorrichtung gemäß Fig. 1;
- Fig. 3:: eine testbare Messschaltung zur Messen einer am Spannungseingang anliegenden Spannung;
- Fig. 4:: eine alternative Messschaltung zur Detektion von Überspannungen am Spannungseingang der Schaltungsvorrichtung gemäß Fig. 1;
- Fig. 5:: einer erste bevorzugte Ausführung einer Messschaltung zur Detektion von Überspannungen am Spannungseingang, mit einem testbaren Pegelschalter und einer galvanische Trennung zur Steuerungseinrichtung;
- Fig. 6:: einer weitere bevorzugte Ausführungsform einer Messschaltung zur Detektion von Überspannungen.

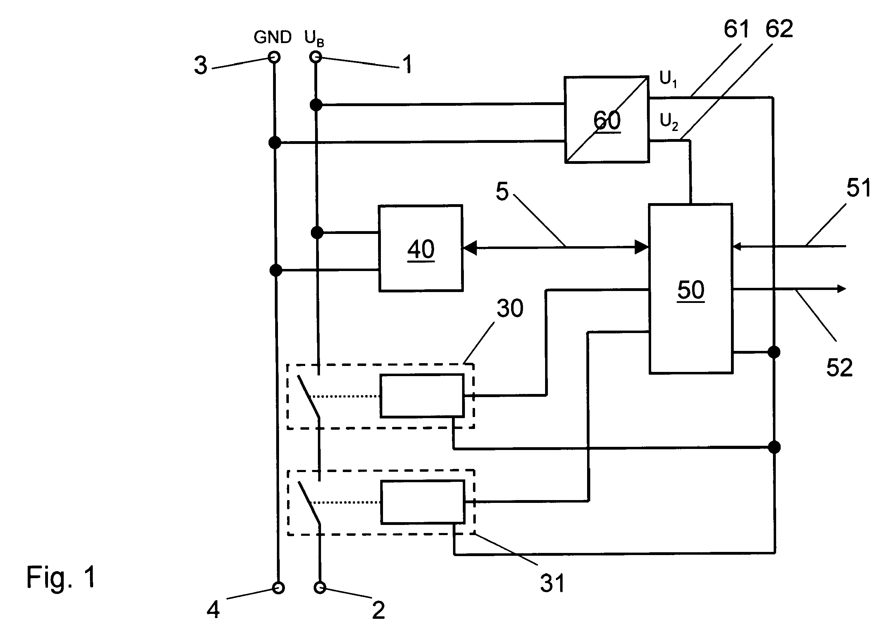

Die Figur 1 zeigt ein Bockschatbild einer erfindungsgemäßen Schaltungsvorrichtung, mit der elektronische Baugruppen vor Überspannungen geschützt werden können, die ggf. über ihre Versorgungsspannungseingänge einkoppeln können.

Die elektronischen Baugruppen in der Automatisierungs- bzw. Sicherheitstechnik sind in der Regel auf eine Nennspannung von 24 VDC ausgelegt, wobei ein Versorgungsspannungsbereich zwischen 18 VDC und 32 VDC (inklusive Welligkeiten und aller Toleranzen) in der Regel zulässig ist.

Wird der obere Grenzwert (z.B. 32 VDC) eines zulässigen Versorgungsspannungsbereichs überschritten, so liegt eine Überspannung vor, die ggf. auch zu einer Zerstörung einer nachgeschalteten elektronischen Baugruppe führen kann.

Die in der Figur 1 dargestellte Schaltungsvorrichtung weist eingangsseitig zwei Spannungsanschlüsse 1 und 3 auf, an der eine Spannungsversorgungseinrichtung angeschlossen werden kann. Zwischen diesen Spannungsanschlüssen kann zum Beispiel eine Nennspannung von 24 VDC bereitgestellt werden, wobei der Spannungsanschluss 3 das Bezugspotential (GND) führt. Die Schaltungsvorrichtung umfasst ausgangsseitig wiederum zwei weitere Spannungsanschlüsse 2 und 4, an die eine jeweilige gegen Überspannungen zu schützende elektronische Baugruppe anschließbar ist.

Der Spannungsanschluss 4 ist beispielhaft mit dem eingangsseitigen Bezugspotentialanschluss 3 fest verbunden, während der Ausgangsspannungsanschluss 2 im dargestellten Beispiel zweckmäßig über zwei in Reihe geschaltete Schalteinrichtungen 30 und 31 von der Spannung am Eingangsspannungsanschluss 1 trennbar ist.

Die erfindungsgemäße Schaltungsvorrichtung kann sowohl ein Bestandteil einer elektronischen Baugruppe sein, als auch in einem separaten Überspannungsmodul eingesetzt werden, an das eine elektronische Baugruppe angeschlossen werden kann.

Mit den zweckmäßig zwei in Reihe geschalteten Schalteinrichtungen 30 und 31 kann auch die Anforderung der Sicherheitstechnik an eine mehrkanalige Ausführung sicherheitsrelevanter Funktionen, d.h. einer sicheren Trennung der beiden Spannungsanschlüsse 1 und 2 gewährleistet werden. Die Schaltungsvorrichtung kann selbstverständlich auch mit einem einkanalig abschaltbaren Versorgungspfad zwischen den Spannungsanschlüssen 1 und 2 realisiert werden. Optional können die Schalteinrichtungen 30, 31 auch zweipolig ausgeführt sein, so dass sowohl der Spannungsanschluss 1, als auch der Bezugspotentialanschluss 3 schaltbar mit den zugeordneten Spannungsanschlüssen 2 und 4 am Ausgang verbunden ist.

Die Schalteinrichtungen 30 und 31 sind in der Figur 1 beispielhaft als Relais ausgeführt, wobei prinzipiell auch Halbleiterschalter verwendbar sind, wobei diese bevorzugt eine galvanische Trennung zur Steuereinrichtung 50 besitzen.

Die Schalteinrichtungen 30 und 31 werden jeweils über einen separaten Steuerkanal von einer Steuereinrichtung 50 redundant angesteuert. Die Steuereinrichtung 50 ist mit einer Messschaltung 40 verbunden, mit der eine zwischen den eingangsseitigen Spannungsanschlüssen 1 und 3 anliegende Versorgungsspannung erfasst, gemessen und/oder überwacht werden kann.

Die Spannungsversorgung für die Steuereinrichtung 50 wird mittelbar über die eingangsseitigen Spannungsanschlüsse 1 und 3 bereitgestellt, wobei die Steuereinrichtung 50 hinter einem Spannungswandler 60 angeordnet ist. Eingangseitig ist der Spannungswandler 60 für Gleich- und Wechselspannungen in einem weiten Spannungsbereich zum Beispiel bis zu 120 V ausgelegt, so dass ausgangsseitig eine geregelte, d.h. von dem weiten Eingangspannungsbereich unabhängige Betriebsspannung für die Steuereinrichtung 50 bereitsteht.

Die Steuereinrichtung 50 zur Überwachung der an der Schaltungsvorrichtung anliegenden Versorgungsspannung ist also gegen Überspannungen, d.h. gegen Spannungen, die über die zulässigen Spannungen, z.B. 32 VDC, hinausgehen, geschützt hinter dem Spannungswandler 60 angeordnet. Mit einer maximalen Eingangsspannung von z.B. 120 V ist der Spannungswandler wesentlich spannungsfester, als die an den Anschlüssen 2 und 4 anschließbaren elektronischen Baugruppen, die durch die Schaltungsvorrichtung geschützt werden sollen.

Die Steuereinrichtung 50 steuert über eine interne Logik, die zum Beispiel durch einen Mikrocontroller bereitgestellt werden kann, die Schalteinrichtungen 30 und 31 derart an, dass der Ausgangsspannungsanschluss 2 beim Erkennen einer Überspannung vom Spannungsanschluss 1 getrennt wird, bevor eine nachgeschaltete und vor Überspannungen zu schützende elektronische 24 V-Baugruppe gefährdet bzw. zerstört wird. Die Schalteigenschaften der Schalteinrichtungen 30 und 31 sind, wie der Spannungswandler 60 auch, auf eine maximal zu erwartende Überspannung, z.B. 120 V, und einen entsprechenden maximalen Strom ausgelegt.

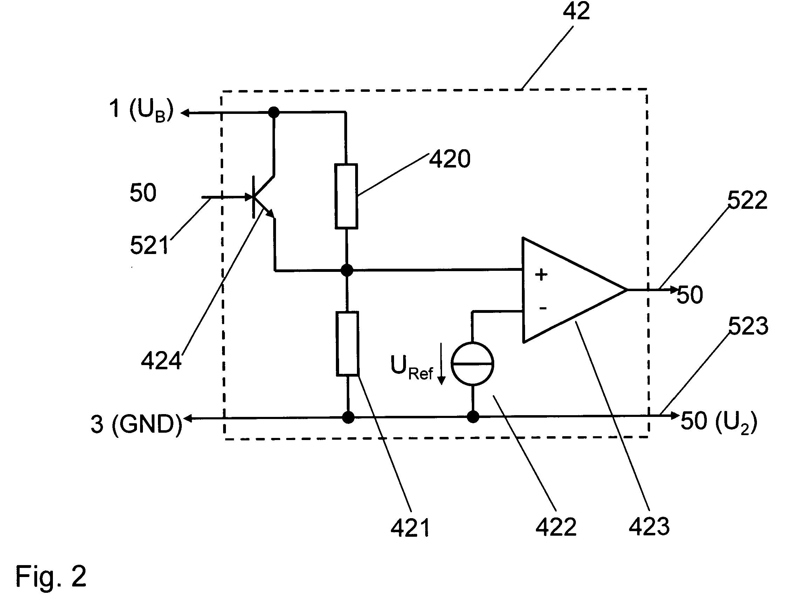

Die Steuereinrichtung 50 ist über eine Anzahl von Leitungen 5 zum Steuern, Messen bzw. Signalisieren mit der Messschaltung 40 verbunden, so dass im Zusammenwirken dieser beiden Komponenten die Spannung zwischen dem Spannungsanschluss 1 und dem Bezugspotentialanschluss 3 bewertet werden kann. Die Messschaltung 40 ist insbesondere auch zum Erkennen von hochohmigen Überspannungen geeignet. Die Leitungen 5 sind in den Figuren 2, 3, 4, 5 und 6 mit den Bezugsziffern 521 bis 523, 531 bis 533, 541 bis 544, 551 bis 554 bzw. 561 bis 568 gekennzeichnet.

Erfindungsgemäß kann, wie aus den weiteren Figuren deutlich werden wird, die Messschaltung 40 von den Steuereinrichtung 50 über die Leitungen 5 zyklisch auf ihre Funktionsfähigkeit hin getestet werden. Somit ist ein zuverlässiges Trennen der nachgeschalteten elektronischen Baugruppen von einer Überspannung jederzeit gewährleistet. Wird eine Fehlfunktion in der Messschaltung 40 erkannt, so wird der Ausgangsspannungsanschluss 2 über die Schalteinrichtungen 30 bzw. 31 von dem Eingangsspannungsanschluss getrennt. Ein von der Steuereinrichtung 50 erkannter Fehler kann somit zumindest im Wege der Abschaltung einer nachgeschalteten elektronischen Baugruppe signalisiert werden.

Die Logik der Steuereinrichtung 50 kann je nach Ausführung der Schaltungsvorrichtung ein oder mehrkanalig ausgeführt werden, um eine entsprechende Anzahl von Schalteinrichtungen redundant anzusteuern. Optional können auch mehrere parallele Messschaltungen 40 zur Überwachung der Versorgungsspannung vorgesehen werden, um die Redundanz und Sicherheit der Schaltungsvorrichtung weiter zu erhöhen.

Optional können an der Steuereinrichtung 50 sichere Logikeingänge 51 und Logikausgänge 52 vorgesehen sein, mit denen Sicherheitsfunktionen wie NOT-AUS-Applikationen zu ermöglichen sind.

Die Messschaltung 40 zur Überwachung der Eingangsspannung kann, wie in den folgenden Figuren deutlich werden wird, je nach Anforderung mit oder ohne eine galvanische Trennung zwischen Steuereinrichtung 50 und den Spannungsanschlüsse 1 und 3 ausgeführt werden. Die Messschaltung 40 kann einen testbare Pegelerkennungsschaltung 42, 44, 45 oder 46 oder eine Spannungsmesseinrichtung 43 beinhalten.

In Figur 2 ist eine erste Pegelerkennungsschaltung 42 dargestellt, die als Messschaltung 40 verwendbar ist. Mit dieser Schaltung ist eine Überspannung zwischen den beiden Spannungsanschlüssen 1 und 3 erkennbar. Die Schaltung umfasst einen Spannungsteiler mit einem ersten Widerstand 420 und einem zweiten Widerstand 421, eine Referenzspannungsquelle 422 sowie einen Komparator 423. Der nicht invertierende Eingang des Komparators ist mit dem Spannungsteiler verbunden, an dem invertierenden Eingang liegt die Referenzspannung der Referenzspannungsquelle 422 an.

Der Spannungsteiler ist derart dimensioniert, dass beim Auftreten einer Überspannung zwischen den Spannungsanschlüssen 1 und 3 eine Spannung an dem nicht invertierenden Eingang des Komparators abfällt, die größer ist, als die Referenzspannung U_{Ref}, die von der Referenzspannungsquelle 422 bereitgestellt wird. In diesem Fall wird über eine Signalleitung 522 am Ausgang des Komparators 423 ein Signal an die Steuereinrichtung 50 gesendet.

Der Spannungsteiler ist bevorzugt hochohmig ausgelegt, um eine Überlastung der Spannungsversorgungseinrichtung an den Spannungsanschlüsse 1 und 3 insbesondere im Falle einer Überspannung zu vermeiden.

Die Pegelerkennungsschaltung 42 umfasst ferner einen durch die Steuereinrichtung 50 ansteuerbaren Transistor 424, der zum Testen der Überspannungserkennung dient. Der Transistor 424 ist zum ersten Widerstand 420 parallel geschaltet, mit dem der Spannungsteiler derart verstimmbar ist, dass die Spannung am nicht invertierenden Eingang des Komparators 423 innerhalb einer zulässigen Versorgungsspannung die Referenzspannung überschreitet. Der Transistor 424 kann dazu innerhalb eines Testzyklus von der Steuereinrichtung 50 über die Steuerleitung 521 angesteuert werden. Sofern die Pegelerkennungsschaltung 42 ordnungsgemäß arbeitet, wird über die Messleitung 522 ein entsprechendes Antwort- bzw. Feedback-Signal aus dem Komparator 423 von der Steuereinrichtung 50 empfangen. Um den Spannungsabfall an dem nichtinvertierenden Eingang des Komparators bei einem durchgestalteten Transistor 424 zu begrenzen, kann ein weiterer Widerstand zu dem Transistor 424 in Reihe geschaltet werden.

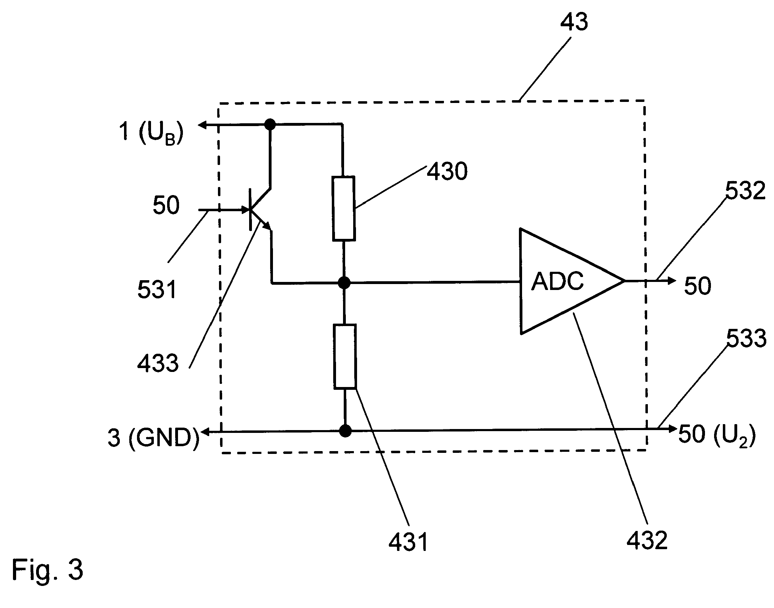

Die Figur 3 zeigt eine Spannungsmesseinrichtung 43, die eine alternative zum Pegelschalter 42 darstellt. Mit dieser Spannungsmesseinrichtung kann die an den eingangseitigen Spannungsanschlüssen 1 und 3 anliegende Versorgungsspannung gemessen werden. Ein hochohmiger Spannungsteiler 430 und 431, der parallel zu dem Versorgungsstrompfad der Schaltungsvorrichtung geschaltet ist, steht mit einem Analog/Digital-Wandler 432 in Verbindung. Der über den Spannungsteiler geteilte Versorgungsspannungswert wird von dem Analog/Digital-Wandler 432 digitalisiert und über eine parallele oder serielle Verbindung 532 an die Logik der Steuereinrichtung 50 übertragen. Der digitalisierte Spannungswert wird mit einem Grenzwert verglichen, so dass einen Überspannung zwischen den Spannungsanschlüssen 1 und 3 in der Logik der Steuereinrichtung 50 erkannt wird. Mit dem Transistor 433, der zum ersten Widerstand 430 parallel geschaltet ist, kann der Spannungsteiler derart verstimmt werden, dass die Steuereinrichtung 50 aus der Veränderung des abgetasteten Spannungswertes auf die Funktionsfähigkeit bzw. auf eine Fehlfunktion in der Spannungsmesseinrichtung 43 schließen kann. der Transistor 433 kann alternativ auch parallel zum zweiten Widerstand 431 angeordnet sein, um den Spannungsteiler in geeigneter Weise zu verstimmen.

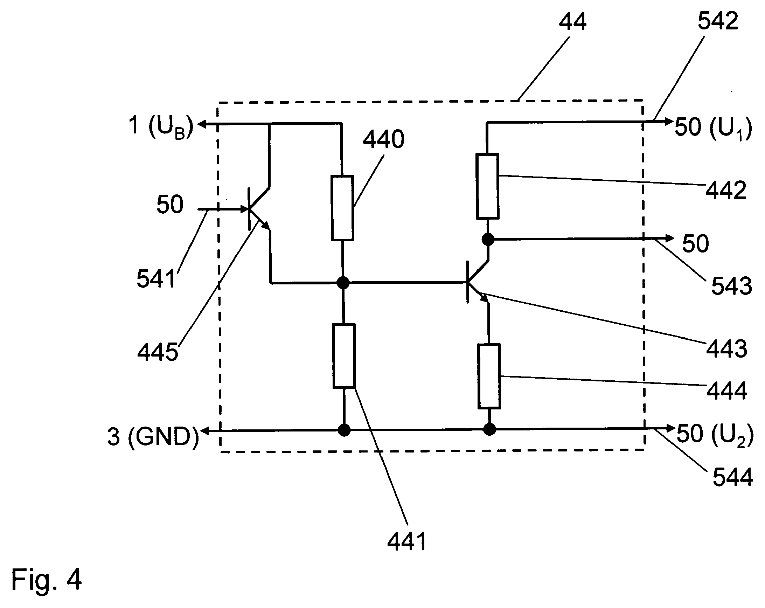

Eine alternative Pegelerkennungsschaltung 44 zur Erkennung einer Überspannung ist in der Figur 4 dargestellt. Diese umfasst, wie die zuvor erläuterte Pegelerkennungsschaltung 41 einen Spannungsteiler mit den Widerständen 440 und 441. Ein Vergleichsschaltkreis wird durch den Transistor 443 mit dem Kollektorwiderstand 442 und dem Emitterwiderstand 444 gebildet.

Der Spannungsteiler ist z.B. derart dimensioniert, dass bei dem überschreiten einer maximal zulässigen Versorgungsspannung von 32 V die Durchlassspannung am Basis-Emitter-Übergang überschritten wird. Der Transistor schaltet durch, so dass ein entsprechender Pegelwechsel auf der Leitung 543 eine Überspannung an die Steuereinrichtung 50 signalisiert.

Über den Transistor 445 kann die Messschaltung 44 durch die gesteuerte Veränderung des Teilerverhältnisses zyklisch getestet werden.

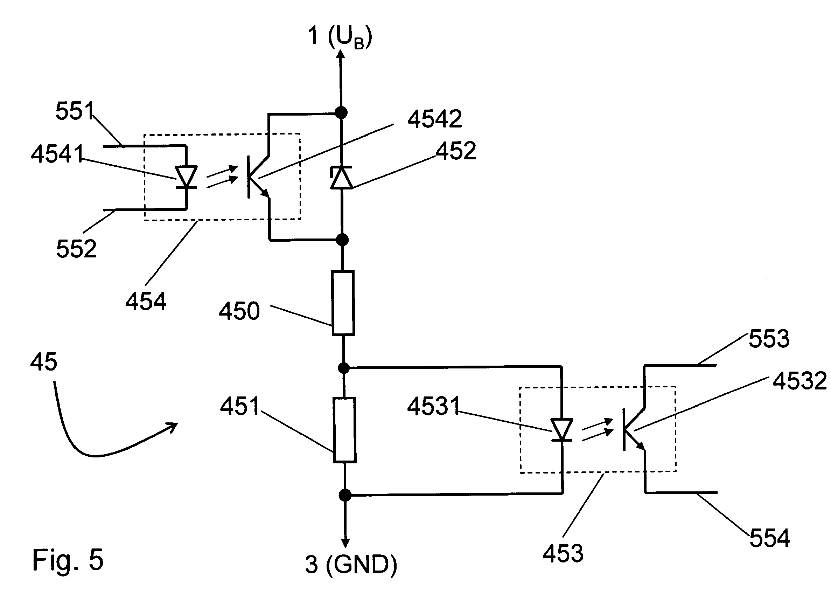

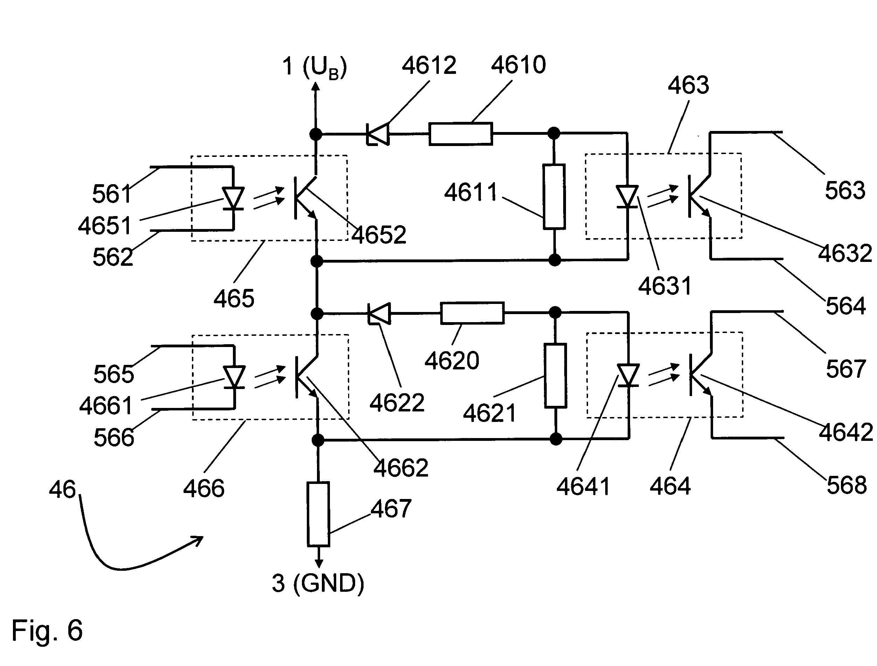

In den Figuren 5 und 6 sind zwei bevorzugte Ausführungen einer Pegelerkennungsschaltung 45 bzw. 46 dargestellt, die zur Steuerungseinrichtung 50 eine vollständige galvanische Trennung aufweist und sich durch einen schaltungstechnisch effizienten Aufbau auszeichnet.

Die testbare Pegelerkennungsschaltung 45, die in der Figur 5 dargestellt ist, stellt einen vorzugsweise hochohmigen Messpfad bereit, der parallel zu dem schaltbaren Hauptstrompfad der Schaltungsvorrichtung angeordnet ist. Der Messpfad zwischen den eingangseitigen Spannungsanschlüssen 1 und 3 umfasst eine Z-Diode 452 sowie einen Spannungsteiler aus wenigstens zwei Widerständen 450 und 451. Zu dem zweiten Widerstand 451 ist die Leuchtdiode 4531 eines ersten Optokopplers 453 parallel geschaltet. Die Z-Diode besitzt beispielsweise eine Z-Spannung von 30 V.

Sofern sich die zwischen den Spannungsanschlüssen 1 und 3 anliegende Versorgungsspannung im Bereich der Nennspannung von 24 VDC befindet, d.h. mit einer Abweichung bis +6 V, sperrt die Z-Diode, so dass kein Strom durch den Messpfad fließt. Somit tritt kein messbares Ereignis auf.

Überschreitet die zwischen den Spannungsanschlüssen 1 und 3 anliegende Versorgungsspannung die Z-Spannung von 30 V, so leitet der Messpfad, wobei der resultierende Stromfluss durch die zwei in Reihe geschalteten Widerstände 450 und 451 begrenzt wird. Über die beiden Widerstände 450 und 451 fällt die anliegende Versorgungsspannung abzüglich den 30 V ab, die an der Z-Diode 452 abfallen. Die Widerstände 450 und 451 bilden einen Spannungsteiler, der zweckmäßig so dimensioniert ist, dass bei einer Versorgungsspannung über 32 V an dem zweiten Widerstand 451 ein Spannung abfällt, die der Durchlassspannung der Leuchtdiode 4531 des Optokopplers 453 entspricht. Mit dem Übergang in den Durchlassbereich erkennt und signalisiert die Leuchtdiode 4531 das Vorliegen einer Überspannung.

Mit dem Überschreiten der maximalen Versorgungsspannung von 32 V wird also die Schaltschwelle des Optokopplers 453 erreicht, so dass die Überspannung über den Fototransistor 4532 und die Signalleitungen 553 und 554 an die Steuereinrichtung 50 übermittelt wird. Mit dem Fototransistor 4542 des zweiten Optokopplers 454 kann die Z-Diode 452 zum Testen des Pegelschalters 45 überbrückt werden. Die Leuchtdiode 4541 im Eingang des zweiten Optokopplers 454 wird von der Steuerungseinrichtung 50 über die Steuerleitungen 551 und 552 angesteuert. In einem Testzyklus wird der Messpfad mit dem Überbrücken der Z-Diode auch im Nennspannungsbereich leitend, so dass ein resultierender Spannungsabfall an dem ersten Widerstand 450 den Wert der Durchlassspannung der Leichtdiode 4531 des ersten Optokopplers überschreitet. Die Steuerungseinrichtung 50 empfängt daraufhin ein erwartetes Signal aus dem ersten Optokoppler, sofern die dargestellte Pegelerkennungsschaltung 45 funktionsfähig ist.

Die in der Figur 5 dargestellte Pegelerkennungsschaltung 45 zeichnet sich wie bereits erwähnt insbesondere durch eine vollständige galvanische Trennung zwischen dem Messpfad und der Steuereinrichtung 50 aus. Ein weiterer wesentlicher Vorteil dieser Schaltung ist, dass die Schwellwerterkennung zur Detektion einer Überspannung durch ein schaltungstechnisches Zusammenwirken von Z-Diode 452, dem Spannungsteiler 450 und 451 sowie der Leuchtdiode 4531 des Optokopplers 453 bereitgestellt wird. Eine zusätzliche Komparatorschaltung inklusive einer ggf. notwendigen Spannungsversorgung ist nicht erforderlich.

In der Figur 6 ist eine alternative bzw. weitergebildete Ausführung einer zweikanaligen Pegelerkennungsschaltung 46 dargestellt, die ebenfalls eine vollständige galvanische Trennung zur Steuereinrichtung 50 aufweist.

Die zweikanalige testbare Pegelerkennungsschaltung 46 stellt einen vorzugsweise hochohmigen Messstrompfad bereit, der parallel zu dem schaltbaren Hauptstrompfad der Schaltungsvorrichtung angeordnet ist. Dieser Messstrompfad umfasst einen ersten und einen zweiten Messkanal, wobei jeder Kanal jeweils eine Z-Diode 4612 bzw. 4622 und einen Spannungsteiler aus einem ersten Widerstand 4610 bzw. 4620 und einem zweiten Widerstand 4611 bzw. 4621 besitzt. Zum zweiten Widerstand des jeweiligen Messkanals ist jeweils eine Leuchtdiode 4631 bzw. 4641 eines ersten Optokopplers 463 bzw. 464 parallel geschaltet. Die Leuchtdiode besitzt jeweils eine Durchlassspannung von z.B. 1,1 V. Die Z-Dioden 4612 und 4622 beider Messkanäle besitzen jeweils eine Z-Spannung von beispielsweise 14 V.

Die beiden Messkanäle sind jeweils über einen schaltbaren Transistor eines zweiten Optokopplers 465 bzw. 466 zum Testen der Pegelerkennungsschaltung 46 überbrückbar.

Ein Messpfad kann auch mehr als die zwei dargestellten Messkanäle besitzen, wobei die Dimensionierung der Z-Dioden entsprechend an die Anzahl der Kanäle angepasst sein muss.

Wenn sich die an den beiden Spannungsanschlüssen 1 und 3 anliegende Versorgungsspannung im Bereich der Nennspannung von 24 VDC befindet, fließt kein Strom durch den Messpfad der Pegelerkennungsschaltung 46. Überschreitet die Versorgungsspannung die Summe der Z-Spannungen beider Z-Dioden 4612 und 4622, d.h. beispielsweise einen Wert von 28 V, so wird der Messpfad leitend. Der Messpfad ist insbesondere im Hinblick auf große Überspannungen z.B. von bis zu 120 V hochohmig ausgelegt, um den Stromfluss und die thermische Belastung zu begrenzen und eine entsprechende Spannungsfestigkeit zu gewährleisten. Zur Strombegrenzung kann auch ein Widerstand 467 am Ausgang des Messstrompfads vorgesehen sein. Das dargestellte Widerstandsnetzwerk ist so dimensioniert, dass spätestens beim Erreichen der maximal zulässigen Versorgungsspannung von 32 V die Optokoppler 463 und 464, d.h. ihre integrierten Leuchtdioden 4631 und 4641 durchgeschaltet sind. Über die Signalleitungspaare 563, 564 sowie 567 und 568 ist eine Überspannungssituation an die Steuereinrichtung 50 zweikanalig signalisierbar.

Die beiden beispielhaften Messkanäle umfassen jeweils einen zweiten Optokoppler 465 und 466, die eine Testbarkeit der Pegelerkennungsschaltung 46 ermöglichen. Durch ein Testsignal von der Steuereinrichtung 50 angesteuert, wird jeweils einer der beiden Optokoppler aktiviert, so dass der korrespondierende Messkanal überbrückt ist. Eine Versorgungsspannung im Bereich der Nennspannung von 24 V überschreitet die Z-Spannung der Z-Diode des verbleibenden, d.h. nicht überbrückten Messkanals, so dass diese Durchschaltet. Die Durchlassspannung der jeweiligen Leuchtdiode im Optokoppler des verbleibenden Messkanals wird ebenfalls überschritten, so dass der Optokoppler aktiviert wird. Die Steuereinrichtung 50 empfängt, unter Voraussetzung einer funktionsfähigen Pegelerkennungsschaltung 46, jeweils ein Feedback-Signal über den jeweils nicht überbrückten Messkanal. Vorzugsweise werden die Messkanäle zyklisch alternierend getestet. Bleib ein Feedback Signal auf ein gesendetes Testsignal aus, so kann die Steuereinrichtung 50 auf ein Fehlfunktion innerhalb der Pegelerkennungsschaltung 46 schließen.

### Bezugszeichenliste

- 1: Eingangsspannungsanschluss
- 2: Ausgangsspannungsanschluss
- 3: Bezugspotentialanschluss
- 30: Schalteinrichtung
- 31: Schalteinrichtung
- 4: Bezugspotentialanschluss
- 40: Messschaltung
- 42: Pegelerkennungsschaltung
- 420: ersten Widerstand
- 421: zweiter Widerstand
- 422: Referenzspannungsquelle
- 423: Komparator
- 424: Transistor/Schaltelement
- 43: Spannungsmesseinrichtung
- 430: erster Widerstand
- 431: zweiter Widerstand
- 432: Analog/Digital-Wandler
- 433: Transistor/Schaltelement
- 44: Pegelerkennungsschaltung
- 440: erster Widerstand
- 441: zweiter Widerstand
- 442: Kollektorwiderstand
- 443: Transistor/Pegelschalter
- 444: Emitterwiderstand
- 435: Transistor/Schaltelement
- 45: Pegelerkennungsschaltung
- 450: erster Widerstand
- 451: zweiter Widerstand
- 452: Z-Diode
- 453: erster Optokoppler
- 4531: Leuchtdiode/Pegelschalter
- 4532: Fototransistor
- 454: zweiter Optokoppler
- 4541: Leuchtdiode
- 4542: Fototransistor/Schaltelement
- 46: Pegelerkennungsschaltung
- 4610: erster Widerstand (1. Kanal)
- 4611: zweiter Widerstand (1. Kanal)
- 4612: Z-Diode (1. Kanal)
- 4620: erster Widerstand (2. Kanal)
- 4621: zweiter Widerstand (2. Kanal)
- 4622: z-Diode (2. Kanal)
- 463: erster Optokoppler (1. Kanal)
- 4631: Leuchtdiode/Pegelschalter
- 4632: Fototransistor
- 465: zweiter Optokoppler (1. Kanal)
- 4651: Leuchtdiode
- 4652: Fototransistor/Schaltelement
- 464: erster Optokoppler (2. Kanal)
- 4641: Leuchtdiode/Pegelschalter
- 4642: Fototransistor
- 466: zweiter Optokoppler (2. Kanal)
- 4661: Leuchtdiode
- 4662: Fototransistor/Schaltelement
- 467: Widerstand
- 5: Leitungen
- 50: Steuereinrichtung
- 51: sichere Logikeingänge
- 52: Logikausgänge
- 521: Steuerleitung
- 522: Signalleitung
- 523: Leitung (Bezugspotential)
- 531: Steuerleitung
- 532: serielle/parallele Verbindungsleitung
- 533: Leitung (Bezugspotential)
- 541: Signalleitung
- 542: Leitung (Versorgungsspannung)
- 543: Signalleitung
- 544: Leitung (Bezugspotential)
- 551: Steuerleitung
- 552: Steuerleitung
- 553: Signalleitung
- 554: Signalleitung
- 561: Steuerleitung (1. Kanal)
- 562: Steuerleitung (1. Kanal)
- 563: Signalleitung (1. Kanal)
- 564: Signalleitung (1. Kanal)
- 565: Steuerleitung (2. Kanal)
- 566: Steuerleitung (2. Kanal)
- 567: Signalleitung (2. Kanal)
- 568: Signalleitung (2. Kanal)
- 60: Spannungswandler
- 61: Ausgangsspannungsanschluss
- 62: Bezugsspannungsanschluss

## Patentansprüche

1. Schaltungsvorrichtung für einen Überspannungsschutz elektronischer Baugruppen, umfassend einen Spannungseingang (1) und einen Spannungsausgang (2), die über wenigstens eine Schalteinrichtung (30) schaltbar miteinander verbunden sind, ferner umfassend eine Messschaltung (40) zum Erfassen einer Spannung am Spannungseingang (1) und eine Steuerungseinrichtung (50), wobei die Steuerungseinrichtung (50) ausgebildet ist, die Schalteinrichtung (30) in Abhängigkeit der mit der Messschaltung (40) erfassten Spannung derart anzusteuern, dass der Spannungsausgang (2) im Falle einer Überspannung am Spannungseingang (1) mittels der Schalteinrichtung (30) vom Spannungseingang (1) getrennt wird, wobei die Steuerungseinrichtung (50) über einen Spannungswandler (60) derart mit dem Spannungseingang (1) verbunden ist, dass auch bei einer Überspannung eine Spannungsversorgung für die Steuerungseinrichtung (50) gewährleistet ist, **dadurch gekennzeichnet, dass** die Messschaltung (40) durch einen von der Steuerungseinrichtung (50) ansteuerbaren Transistor (424; 433; 445; 4542; 4652, 4662) auf ihre Funktionsfähigkeit hin testbar ist.

2. Schaltungsvorrichtung nach vorstehendem Anspruch, **dadurch gekennzeichnet, dass** die Messschaltung (40) einen Messstrompfad mit wenigstens einem Messkanal besitzt, wobei jedem Messkanal jeweils ein Pegelschalter (423, 443, 453, 463, 464) zugeordnet ist.

3. Schaltungsvorrichtung nach vorstehendem Anspruch, **dadurch gekennzeichnet, dass** die Pegelschalter dazu ausgebildet sind, das Überschreiten eines vorbestimmten Spannungspegels zu erkennen und über eine Signalleitung (5) an die Steuerungseinrichtung (50) zu signalisieren.

4. Schaltungsvorrichtung nach vorstehendem Anspruch, **dadurch gekennzeichnet, dass** jedem Messkanal ein Schaltelement (424; 445; 4542; 4652, 4662) zugeordnet ist, das von der Steuerungseinrichtung (50) ansteuerbar ist, und das zum Testen der Messschaltung (40) ausgebildet ist.

5. Schaltungsvorrichtung nach Anspruch 4, **dadurch gekennzeichnet, dass** der Pegelschalter einen Komparator (423) umfasst, der mit einer Referenzspannungsquelle (422) verbunden ist,

6. Schaltungsvorrichtung nach Anspruch 4, **dadurch gekennzeichnet, dass** der Pegelschalter einen Transistor (443) umfasst.

7. Schaltungsvorrichtung nach Anspruch 4, **dadurch gekennzeichnet, dass** der Pegelschalter einen ersten Optokoppler (453; 463, 464) und das Schaltelement des einen zweiten Optokoppler (454; 465, 466) umfasst.

8. Schaltungsvorrichtung nach Anspruch 7, **dadurch gekennzeichnet, dass** der Messstrompfad einen Messkanal besitzt, der eine Reihenschaltung aus einer Z-Diode (452), einem ersten Widerstand (450) und einem zweiten Widerstand (451) umfasst, wobei der erste Optokoppler (453) parallel zum zweiten Widerstand (451) geschaltet ist.

9. Schaltungsvorrichtung nach Anspruch 7 oder 8, **dadurch gekennzeichnet, dass** der zweite Optokoppler (454) zur Z-Diode (452) parallel geschaltet ist, so dass die Z-Diode zum Testen der Messschaltung (40) überbrückbar ist.

10. Schaltungsvorrichtung nach Anspruch 7, **dadurch gekennzeichnet, dass** der Messstrompfad wenigstens zwei in Reihe geschaltete Messkanäle umfasst, wobei jeder Messkanal eine Reihenschaltung aus einer Z-Diode (4612, 4622), einem ersten Widerstand (4610, 4620) und einem zweiten Widerstand (4611, 4621) umfasst, wobei der erste Optokoppler (463, 464) eines Messkanals zum zweiten Widerstand parallel geschaltet ist.

11. Schaltungsvorrichtung nach Anspruch 7, **dadurch gekennzeichnet, dass** der zweite Optokoppler (465, 466) zum zugeordneten Messkanal parallel geschaltet ist, so dass der jeweilige Messkanal zum Testen der Messschaltung (40) überbrückbar ist.

12. Schaltungsvorrichtung nach Anspruch 1 **dadurch gekennzeichnet, dass** die Messschaltung (40; 43) einen Spannungsteiler (430, 431) und einen Digital/Analog-Wandler (432) zum Messen und Digitalisieren einer Spannung am Spannungseingang (1) umfasst.

13. Überspannungsschutzmodul umfassend eine Schaltungsvorrichtung gemäß einem der vorstehenden Ansprüche 1 bis 12, **dadurch gekennzeichnet, dass** der Spannungsausgang (2) der Schaltungsvorrichtung mit einer elektronischen Baugruppe und der Spannungseingang (1) mit einer Spannungsquelle verbindbar ist.

14. Verwendung einer Schaltungsvorrichtung gemäß einem der Ansprüche 1 bis 12 innerhalb einer elektronischen Baugruppe.

## Claims

1. Circuit device for overvoltage protection of electronic assemblies, comprising a voltage input (1) and a voltage output (2) which are connected together so as to be switchable via at least one switching device (30), further comprising measuring circuitry (40) for detecting a voltage at the voltage input (1) and a control device (50), wherein the control device (50) is configured to actuate the switching device (30) in dependence upon the voltage detected by the measuring circuitry (40) such that the voltage output (2) is separated from the voltage input (1) by means of the switching device (30) in the event of an overvoltage at the voltage input (1), wherein the control device (50) is connected to the voltage input (1) via a voltage converter (60) such that a voltage supply for the control device (50) is ensured even in the case of overvoltage, **characterised in that** the measuring circuitry (40) can be tested as to its functionality by a transistor (424; 433; 445; 4542; 4652, 4662) which can be actuated by the control device (50).

2. Circuit device as claimed in the preceding claim, **characterised in that** the measuring circuitry (40) has a measuring current path having at least one measuring channel, wherein a gauge switch (423, 443, 453, 463, 464) is allocated to each measuring channel.

3. Circuit device as claimed in the preceding claim, **characterised in that** the gauge switches are configured to detect when a predetermined voltage level is exceeded and to signal same to the control device (50) via a signal line (5).

4. Circuit device as claimed in the preceding claim, **characterised in that** a switching element (424; 445; 4542; 4652, 4662) is allocated to each measuring channel and can be actuated by the control device (50) and is configured for testing the measuring circuitry (40).

5. Circuit device as claimed in claim 4, **characterised in that** the gauge switch includes a comparator (423) which is connected to a reference voltage source (422).

6. Circuit device as claimed in claim 4, **characterised in that** the gauge switch includes a transistor (443).

7. Circuit device as claimed in claim 4, **characterised in that** the gauge switch includes a first optocoupler (453; 463, 464) and the switching element includes a second optocoupler (454; 465, 466).

8. Circuit device as claimed in claim 7, **characterised in that** the measuring current path has a measuring channel which includes a series connection of a Z diode (452), a first resistor (450) and a second resistor (451), wherein the first optocoupler (453) is connected in parallel with the second resistor (451).

9. Circuit device as claimed in claim 7 or 8, **characterised in that** the second optocoupler (454) is connected in parallel with the Z diode (452) so that the Z diode can be bridged for testing the measuring circuitry (40).

10. Circuit device as claimed in claim 7, **characterised in that** the measuring current path includes at least two series-connected measuring channels, wherein each measuring channel includes a series connection of a Z diode (4612, 4622), a first resistor (4610, 4620) and a second resistor (4611, 4621), wherein the first optocoupler (463, 464) of a measuring channel is connected in parallel with the second resistor.

11. Circuit device as claimed in claim 7, **characterised in that** the second optocoupleur (465, 466) is connected in parallel with the allocated measuring channel so that the respective measuring channel can be bridged for testing the measuring circuitry (40).

12. Circuit device as claimed in claim 1, **characterised in that** the measuring circuitry (40; 43) includes a voltage divider (430, 431) and a digital/analogue converter (432) for measuring and digitising a voltage at the voltage input (1).

13. Overvoltage protection module comprising a circuit device as claimed in any one of the preceding claims 1 to 12, **characterised in that** the voltage output (2) of the circuit device can be connected to an electronic assembly and the voltage input (1) can be connected to a voltage source.

14. Use of a circuit device as claimed in any one of claims 1 to 12 within an electronic assembly.

## Revendications

1. Dispositif de commutation pour la protection de groupes de composants électroniques contre les surtensions, comportant une entrée de tension (1) et une sortie de tension (2) reliées l'une à l'autre de manière commutable par au moins une unité de commutation (30), comprenant en outre un circuit de mesure (40) pour la détection d'une tension à l'entrée de tension (1) et un dispositif de commande (50), ledit dispositif de commande (50) étant réalisé pour commander l'unité de commutation (30) en fonction de la tension détectée par le circuit de mesure (40) de manière à séparer la sortie de tension (2) de l'entrée de tension (1) au moyen de l'unité de commutation (30) en cas de surtension à l'entrée de tension (1), le dispositif de commande (50) étant relié à l'entrée de tension (1) par un transformateur de tension (60) de manière à assurer une alimentation en tension pour le dispositif de commande (50) y compris en cas de surtension, **caractérisé en ce que** l'aptitude au fonctionnement du circuit de mesure (40) peut être cycliquement testée par un transistor (424 ; 433 ; 445 ; 4542 ; 4652, 4662) commandé par le dispositif de commande (50).

2. Dispositif de commutation selon la revendication précédente, **caractérisé en ce que** le circuit de mesure (40) présente un chemin de courant de mesure avec au moins un canal de mesure, un interrupteur de niveau (423, 443, 453, 463, 464) étant associé à chaque canal de mesure.

3. Dispositif de commutation selon la revendication précédente, **caractérisé en ce que** les interrupteurs de niveau sont prévus pour détecter le dépassement d'un niveau de tension prédéfini et à signaler celui-ci au dispositif de commande (50) via une ligne de signaux (5).

4. Dispositif de commutation selon la revendication précédente, **caractérisé en ce qu'**un élément de commutation (424 ; 445 ; 4542 ; 4652, 4662) est associé à chaque canal de mesure, lequel est commandé par le dispositif de commande (50) et est prévu pour tester le circuit de mesure (40).

5. Dispositif de commutation selon la revendication 4, **caractérisé en ce que** l'interrupteur de niveau comprend un comparateur (423) relié à une source de tension de référence (422).

6. Dispositif de commutation selon la revendication 4, **caractérisé en ce que** l'interrupteur de niveau comprend un transistor (443).

7. Dispositif de commutation selon la revendication 4, **caractérisé en ce que** l'interrupteur de niveau comprend un premier optocoupleur (453 ; 463, 464) et l'élément de commutation un deuxième optocoupleur (454 ; 465, 466).

8. Dispositif de commutation selon la revendication 7, **caractérisé en ce que** le chemin de courant de mesure comporte un canal de mesure comprenant un circuit en série composé d'une diode Zener (452), d'une première résistance (450) et d'une deuxième résistance (451), le premier optocoupleur (453) étant monté parallèlement à la deuxième résistance (451).

9. Dispositif de commutation selon la revendication 7 ou 8, **caractérisé en ce que** le deuxième optocoupleur (454) est monté parallèlement à la diode Zener (452), si bien que la diode peut être pontée pour le test du circuit de mesure (40).

10. Dispositif de commutation selon la revendication 7, **caractérisé en ce que** le chemin de courant de mesure comprend au moins deux canaux de mesure montés en série, chaque canal de mesure comprenant un circuit en série composé d'une diode Zener (4612, 4622), d'une première résistance (4610, 4620) et d'une deuxième résistance (4611, 4621), le premier optocoupleur (463, 464) d'un canal de mesure étant monté en parallèle à la deuxième résistance.

11. Dispositif de commutation selon la revendication 7, **caractérisé en ce que** le deuxième optocoupleur (465, 466) est monté en parallèle au canal de mesure associé, si bien que chaque canal de mesure peut être ponté pour le test du circuit de mesure (40).

12. Dispositif de commutation selon la revendication 1, **caractérisé en ce que** le circuit de mesure (40 ; 43) comprend un diviseur de tension (430, 431) et un convertisseur analogique/numérique (432) pour la mesure et la numérisation d'une tension à l'entrée de tension (1).

13. Module électronique de protection contre les surtensions comprenant un dispositif de commutation selon l'une des revendication 1 à 12, **caractérisé en ce que** la sortie de tension (2) du dispositif de commutation peut être reliée à un groupe de composants électroniques, et **en ce que** l'entrée de tension (1) peut être reliée à une source de tension.

14. Utilisation d'un dispositif de commutation selon l'une des revendications 1 à 12 à l'intérieur d'un groupe de composants électroniques.
